# EUROPEAN PATENT APPLICATION

(11) **EP 0 560 504 A1**
(43) Date of publication of application: **15.09.1993**
(21) Application number: 93301252.8
(22) Date of filing: 19.02.1993
(51) Int. Cl.: G01N 1/28, B01J 4/04

(54) **Process and device for metering of solutes into liquids**

(30) Priority: 04.03.1992 US 845910
(71) Applicant: ROHM AND HAAS COMPANY, Philadelphia Pennsylvania 19105 (US)
(72) Inventor: Crabb, Charles Cecil, Schwenksville, Pennsylvania 19473 (US)
(74) Representative: Tanner, James Percival

(57) **Abstract**

A permeator device and method for the metering of solute- source materials into liquids thereby providing a constant, known concentration of solute in the liquid is disclosed. In particular, a process for providing a source of dilute constant concentration streams of volatile organic chemicals in water is provided. The invention is useful for determining the adsorption characteristics of adsorbent materials for volatile organic chemicals in a facile, quantitative manner and for the controlled delivery of solutes into specific target environments.

## Description

This invention is concerned with devices and methods for the metering of solute-source materials into liquids such that a constant, known concentration of the solute is provided in the liquid. In particular, this invention is concerned with a process for providing a source of dilute constant concentration streams of volatile organic chemicals in water. The invention may be used to determine the adsorption capacity of different adsorbent materials for volatile organic chemicals in a facile, quantitative manner. The invention may also be used for the delivery of a wide variety of materials via liquid streams into certain target environments. Among the types of applications are, for example, the controlled addition of antimicrobials for the treatment of wood or water-based systems and the delivery of agricultural fertilizers or pesticides into liquids to treat crop fields.

It is well known that permeation tubes may be used for generating gas mixtures of known composition and concentration for use in characterization of low level pollutants or contaminants in a gas phase, e.g., air (*Permeation and Diffusion Devices,* pp 1-9, Thermedics Inc., Woburn, Massachusetts). These tubes have generally been made from a permeable polymeric material, e.g., fluorocarbon polymers. In the field of pollution instrumentation, permeation tubes are employed to generate small quantities of precisely measured pure pollutant gases where the gas is stored in the permeation tube for subsequent dilution with purified air. Temperature, flow rate of diluent gas, surface area of the permeation tube, thickness of the tube walls, and material of construction used for the permeation tube are all factors which affect control of the concentration of the pollutant in question. In the field of gas phase permeation tubes, improvements have been derived from using limited surface area devices based on gas permeable membranes encased in a housing, the housing being made of material which itself is not permeable to the gas (see US-A-3,788,545).

In the field of pollution analysis and instrumentation where liquid streams (usually water) containing organic chemicals are required, however, the same approach used for gas phase sample analyses cannot be applied. The volatility of many of the organic compounds which are of interest poses special problems with preparing known concentration solutions for analysis. Depending on the volatile organic chemical (compound), hereinafter referred to as VOC, known concentration solutions of pollutants in liquid streams may be prepared by dissolving small amounts of the VOC in large quantities of purified water, allowing the water solution to come to equilibrium with any air space above it (head-space) and then sampling the liquid for analysis to verify the concentration of VOC initially added. If a different concentration of VOC is required another sample of water must be treated with a different amount of the VOC in order to generate a solution representing a different VOC concentration. This method suffers from the variability due to the volume of air head-space in contact with the aqueous solution of VOC at any given time; different head-space volumes which may occur for a given amount of VOC dissolved in water will affect the amount of VOC actually present in the aqueous solution. In order to maintain a wide range of solutions representing different known VOC concentrations large volumes of different water solutions must be prepared and stored, usually at constant temperature. Large volumes of water solutions are required because most VOCs of interest in the pollution field have limited solubility in water, e.g., chlorohydrocarbons, requiring excessive volumes of water to dissolve the VOC. In addition, VOC solutions prepared and stored in this fashion undergo changes in the concentration of VOC over time due to the migration of the VOC into the air head-space that develops as samples are withdrawn from the storage container.

Another approach used to generate low-level concentrations of a pollutant in aqueous streams involves the preparation of saturated solutions of a pollutant, e.g., carbon tetrachloride (CCl₄), in large storage vessels where the saturated solutions are kept in constant contact with CCl₄ vapours. The saturated CCl₄ solution is then metered into a stream of pure water for dilution to the desired concentration (*Treatment of Water by Granular Activated Carbon,* M.J. McGuire and I.H. Suffet, Advances in Chemistry Series **202**, American Chemical Society, p 126, 1983). This method suffers from the need to prepare and store large volumes of concentrated organic-containing solutions, headspace effects and a separate mixing and dilution step before achieving the desired low-level concentration solution.

Yet another approach used to generate low-level concentrations of pollutants in aqueous streams is to prepare concentrated feed solutions of organic chemicals in a gas-sampling bag (which collapses as solution is removed) for dilution with additional water in a mixing tank to produce the desired low-level concentrations of organics (*Prediction of GAC Performance Using Rapid Small-Scale Column Tests,* J.C. Crittenden *et al,* p 98, American Water Works Association Research Foundation, 1989). This method suffers from the need to prepare and store large volumes of concentrated organic-containing solutions and a separate mixing/dilution step before achieving the desired low-level concentration solution.

The present invention overcomes many of the disadvantages of previous methods used to prepare and maintain different known concentration samples for the analysis of VOCs in aqueous systems. For example, the present invention provides a constant concentration VOC-containing liquid stream upon demand, allows the solute concentration to be readily varied and avoids the prior techniques of preparing large quantities of known concentration solutions with limited storage stability. It is an object of the present invention, therefore, to provide a device and a process for the precise metering of solute-source materials, particularly volatile organic chemicals, into a liquid stream which eliminates the need for preparation and storage of separate liquid solutions of different solute concentrations.

According to the present invention there is provided a process for providing the precise metering of solute-source materials, preferably volatile organic chemicals, into a moving liquid stream to give a constant concentration of solute in the moving liquid stream, which comprises contacting the moving liquid stream with one or more permeators having walls permeable to a solute-source material and containing the solute-source material. The permeators are constructed so that the solute-source material permeates at a constant rate from within the permeator to the moving liquid stream outside of the permeator. The liquid stream containing the solute also may be connected to monitoring devices for determining the concentration of solute in the liquid.

According to the present invention there is also provided a process for evaluating different adsorbent media for their effectiveness in removing solutes, for example volatile organic chemicals, from liquid streams, which comprises: (a) contacting a moving liquid stream with one or more permeators containing a solute-source material to provide a constant concentration of solute in the moving liquid stream; (b) determining the concentration of the solute in the moving liquid stream which has been in contact with the permeator(s); (c) passing the moving liquid stream which has been in contact with the permeator(s) through a known amount of adsorbent material; and (d) determining the concentration of the solute in the moving liquid stream after the liquid stream has passed through the adsorbent material.

The present invention further provides a permeator device for providing the precise metering of solute-source materials into a liquid such that a constant, known concentration of the solute is present in the liquid. The permeator device comprises a housing having inlet and outlet openings for allowing movement of the liquid through the housing, and one or more permeators positioned within the housing, each permeator having walls permeable to a solute-source material.

The permeator device may further comprise a supply source of liquid, a first liquid conduit connecting the supply source and the inlet opening of the housing and means suitable for moving the liquid from the supply source through the liquid conduit and housing, for example a mechanical pump.

In actual use, the permeator device includes one or more permeators where a solute-source material, for example a volatile organic chemical, is disposed within the permeator(s) in an amount sufficient to permeate at a constant rate through the walls of the permeator(s) thereby providing a concentration of solute in the liquid. The outlet of the housing may be connected by a second liquid conduit to a means for determining the solute concentration in the liquid. The means for determining solute concentration may be monitoring devices (such as ultraviolet, infrared, total organic carbon (TOC) or refractive index detectors) or monitoring sample ports.

The permeator device may comprise a means for controlling the temperature of the liquid within the housing to a predetermined temperature. For example, the means for controlling the temperature of the liquid may be a jacket surrounding the housing through which a fluid circulates at a predetermined temperature.

The supply source of liquid may be any source which is capable of providing a continuous supply of liquid, e.g., a reservoir (carboy or barrel) of solvent, water, tap water line, etc. The liquid may be any liquid which is compatible with the materials of construction of the permeator device, i.e., the liquid does not react with or cause appreciable change, such as swelling or softening, in the physical characteristics of the elements of the device. The liquid may be any liquid which is a solvent for the particular solute-source material present in the permeator, i.e, it must be capable of dissolving the solute-source material to some measurable degree. Most often the liquid will be a solvent capable of only limited dissolution of the solute-source material in question; solvents capable of dissolving significant quantities of solute-source material, i.e., greater than about 5% (weight/weight), although suitable for use in present invention, are also used to prepare relatively concentrated solutions of solutes for direct use by dilution to known concentration solutions of solute.

Most commonly the liquid substantially will be water, thus providing an aqueous based liquid stream. Although the aqueous liquid stream will be substantially water, i.e., greater than about 50% by weight of the liquid stream, the liquid stream may also contain minor amounts, i.e., less than about 50% by weight of the liquid stream, of other components provided that the minor components do not react with or cause appreciable change in the physical characteristics of the elements of the device; in addition, the minor components should not cause appreciable change in the permeation characteristics of the permeator itself or the permeator contents. Representative of the types of minor components which may be present are: inorganic salts (e.g. sodium, potassium, magnesium and calcium chlorides; calcium and magnesium carbonates, and the like), water soluble polymers (e.g. polyacrylic acid, polyalkylene glycols and the like), and water soluble dispersants and surfactants. Preferably the liquid stream will be composed of greater than about 95% by weight water with less than about 5% by weight of minor components, most preferably the liquid stream will be greater than 99% by weight water with less than 1% by weight of minor components.

The housing may be any container which is capable of maintaining the permeator(s) in an enclosed space, e.g., columns, tubing or pipes constructed from suitably inert materials which are substantially unaffected by the liquid, i.e., they do not interact or react with the liquid streams or solute-source materials involved in the process; for example, the housing may be constructed of materials selected from glass, plastic and metal (such as stainless steel). In like manner, all liquid conduits are commonly constructed of metal (stainless steel) or plastic tubing, although any suitably inert material of construction may be used.

The housing may take many forms (size, shape, dimensions) depending upon the particular application to be used. For example, when the permeator device is used to generate low-level known concentrations of VOCs in aqueous streams, a convenient form for the housing is a cylindrical tube or pipe of sufficient length and diameter to contain one or more permeators. In this case, glass columns of from about 1.91 to about 30.48 cm (about 0.75 to about 12 inches) in diameter and from about 25.4 cm to about 1.83 m (about 10 inches to about 6 feet) in length may be used to house the permeator(s). Preferably, the dimensions of the housing are from about 2.54 to about 10.16 cm (about 1 to about 4 inches) in diameter and from about 45.72 cm to about 1.22 m (about 18 inches to about 4 feet) in length. Means for transferring the liquid from the liquid supply source to the housing are any suitable pumping means, e.g., mechanical or positive displacement pumps, or pressurized air.

The permeator(s) may be supported in the housing by standing the permeator(s) on end against the bottom of the housing or a fritted support plate may be placed in the bottom of the housing as a support means for the permeator(s). When more than one permeator is used it may be preferable to use a support plate shaped in the form of a basket and fitted with a long handle to facilitate removal of, and access to, the permeators for refilling with solute-source material.

The permeator may be constructed of any suitable material which allows permeation of the solute-source material. For example, when the solute-source materials are VOCs, poly(tetrafluoroethylene) plastic (TFE) tubing is particularly preferred and fluorinated ethylene-propylene polymer (FEP) is also suitable; when very low permeation rates are desired, FEP tubing may be preferred due to its generally lower permeability relative to TFE tubing. Among other polymeric materials which may be used for the permeators are polyethylene, polybutylene, polyvinylchloride, chlorinated polyvinylchloride, nylon and the like. Polymers used in the construction of the permeators must be chemically inert to the solute-source material in order to preserve the lifetime of the permeator and provide a constant permeation rate of the solute-source material, i.e., the polymer should not be significantly swollen by or chemically reactive with the solute-source material. The polymers must also allow permeation of the solute-source material through the walls of the permeator so that transfer of the solute-source material from inside the permeator to the liquid stream outside is attained. Permeation means that the solute-source material diffuses on a molecular level through the walls of the permeator; once the wall material has been saturated with the solute-source material, a constant permeation rate (grams/minute) is established.

The permeator is made by sealing a solute-source material within a container made of an appropriate material, e.g. an appropriate polymeric material. The container may take a wide variety of shapes depending upon the particular material of construction available, for example, rectangular, oblong, spherical, cylindrical, tubular and the like. Permeators in the form of a cylindrical tube are preferred due to the uniform surface that is exposed to the liquid streams. The permeator is sealed by any appropriate means which maintains the closure such that no leakage of solute-source material occurs around the sealing means. Plugs of a suitable inert material may be used to form a leak-proof fit with the ends of the permeator, e.g., glass rod or inert plastic plugs. In addition, constriction or retaining bands may be applied around the ends of the permeator to ensure a leak-proof fit. In a preferred mode, polished glass plugs are used; these plugs are easily removed for refilling of the permeator with solute-source material.

Physical dimensions of the permeator may be any combination of length, internal diameter and wall thickness which is consistent with the desired permeation rate and concentration of solute in the liquid stream. Permeator physical dimensions may vary widely to fit a particular application. When the permeator device is used to generate low-level concentrations of VOCs in aqueous streams effective lengths may be from about 5.08 to 10.16 cm (about 2 to 4 inches) to as much as about 91.44 cm to 1.22 m (about 3 to 4 feet); wall thicknesses may be from about 0.025 mm to about 3.18 mm (about 0.001 to about 0.125 inches 0; internal diameters of the tubing may be from about 3.18 mm to about 1.27 cm (about 0.125 to about 0.5 inches). By effective length is meant the length actually in contact with the contents of the permeator, i.e., the ends of the permeator which surround the sealing plugs or other sealing means are not considered part of the effective length. Preferred effective lengths are from about 7.62 to about 15.24 cm (about 3 to about 6 inches); typical wall thicknesses are from about 0.13 to about 0.51 mm (about 0.005 to about 0.02 inches), preferably from about 0.25 to about 0.38 mm (about 0.010 to about 0.015 inches), most preferably 0.3 mm (0.012 inches); and preferred internal diameters are from about 6.35 to about 9.53 mm (about 0.25 to about 0.375 inches), most preferably 8.26 mm (0.325 inches). The preferred dimensions are those which are most suitable for providing VOC levels from about 0.1 parts per million (ppm) to about 20 ppm in the liquid stream (weight/ weight). In a preferred embodiment of the invention the walls of the permeator(s) are poly(tetrafluoroethylene) and have a thickness of from 0.13 to 0.51 mm (0.005 to 0.02 inches), preferably from 0.25 to 0.38 nun (0.010 to 0.015 inches).

The only practical limiting factor regarding the concentration of solute produced in the liquid streams is the maximum solubility of the particular solute. For example, if enough permeators made from appropriate polymeric tubing materials of sufficient surface area were to be used with the appropriate liquid flow rates, the following maximum concentrations (representing the maximum solubility in water) of VOCs in aqueous liquid streams would be attainable: up to about 8000 ppm chloroform, up to about 8000 ppm 1,2-dichloroethane, up to about 500 ppm toluene, and up to about 800 ppm carbon tetrachloride. In actual practice, however, much lower levels of VOCs in aqueous liquid streams are of interest from a pollution analysis standpoint, e.g., from about 0.1 to about 20 ppm. Use of the present invention for these relatively low-level solute concentrations is particularly advantageous when compared to prior methods which are subject to significant variability caused by the presence of vapour headspace in storing or maintaining low-concentration solute solutions.

Although a liquid-form organic compound is most commonly used as the solute-source material, any solid-form inorganic or organic compound which exhibits a measurable permeation rate into the liquid stream may be used. For example, naphthalene, benzoic acid, salicylic acid, anthracene, caffeine, camphor and other organic compounds which sublime would be suitable as solute-source materials. Bromine, iodine and other volatile inorganic chemicals would also be suitable. By solute-source material we mean any material which is capable of establishing an equilibrium between the solid or liquid material itself and the enclosed vapour space within the permeator so as to provide a measurable permeation rate into the liquid stream outside. The permeator will maintain its constant delivery rate as long as any liquid remains inside the permeator to maintain the liquid-or solid-vapour equilibrium. When the term "solute" is used alone it refers to the existence of the "solute-source material" in its dissolved state, i.e., in the liquid stream.

Volatile organic chemicals (VOCs) are generally recognized to include those organic compounds with relatively high volatility and relatively low water solubility, although other, more narrow, definitions have been used by drinking water regulatory agencies depending upon the analytical methods used (*Significance and Treatment of Volatile Organic Compounds in Water Supplies,* N.M. Ram, R.F. Christman and K.P. Cantor, p 57, Lewis Publishers, 1990). Among the VOCs which may be used to provide liquid streams of known VOC concentrations are aliphatic and aromatic hydrocarbons and their corresponding halogenated analogues, for example: pentanes, hexanes, heptanes, octanes, and the like and corresponding unsaturated derivatives; benzene; toluene; xylenes; alkylated benzenes; naphthalene and alkylated naphthalenes; styrene; vinyltoluene; and chloro-and bromo-substituted derivatives of the aforementioned alkanes, alkenes and aromatic hydrocarbons, such as chlorobenzene, brombenzene, chloronaphthalene and the like. Of particular interest are polyhalogenated derivatives of the aforementioned aliphatic and aromatic hydrocarbons, e.g., carbon tetrachloride, chloroform, dichloroethanes, dichloropropanes, dichloromethane, dichloroethylenes, trichloroethylenes, trichloroethanes, dibromoethanes, dichlorobenzene, chlordane, *bis*(chlorophenyl)-dichloroethane (DDD), *bis*(chlorophenyl)-trichloroethane (DDT), polybrominated and polychlorinated biphenyls and the like.

Aliphatic and aromatic alcohols, ketones, aldehydes, carboxylic acids, esters, amides, nitriles and the like, although possessing water solubilities somewhat greater than conventional VOCs, are also candidates for use, such as methanol, isopropyl alcohol, ethanol, butanols, acetone, methylethyl ketone, methylvinyl ketone, methylisobutyl ketone, acetaldehyde, butyraldehyde, benzaldehyde, acetic acid, butyric acid, methyl acetate, ethyl acetate, butyl acetate, N,N-dimethylformamide, acetonitrile, acrylonitrile, methyl benzoate and the like.

Highly volatile solute-source materials which are gaseous at or above ambient temperatures (15-25°C) may also be used if they are cooled sufficiently to a liquid state before charging to the permeator provided that the volatile solute-source material maintains some liquid phase in equilibrium with the gas phase inside the permeator after being sealed within the permeator. In addition, a volatile solute-source material should not produce such a vapour pressure that the internal pressure results in rupture of the permeator or leakage around the seals of the permeator. Representative of these particularly volatile solute-source materials are: methyl and ethyl chloride, methyl and ethyl bromide, vinyl chloride, neopentane, butadiene, butenes and the like.

Organic materials which may be used as antimicrobials in the prevention of bacterial or fungal growth in water-based systems, wood products and the like, are also candidates as solute-source materials. For example, triazines, trichloroisocyanuric acid, and isothiazolones (such as 2-methyl-3-isothiazolone and 5-chloro-2-methyl-3-isothiazo-lone) are commonly used to treat cooling tower water; 4,5-dichloro-2-octyl-3-isothiazolone is commonly used for the preservation of wood products. Applications of other general purpose antimicrobials (for example, methylenebis(thiocyanate), bromochlorodimethylhydantoins, dibromonitrilopropionamide, etc.) as algicides, slimicides, fungicides and the like, would also benefit from the device and process of the present invention for the delivery of such antimicrobials in a controlled manner to specific environments.

Organic materials which may be used as antioxidants (such as phenolic compounds, e.g., butylated hydroxytoluene and the like), corrosion inhibitors (such as amine compounds) and the like are additional candidates as solute-source materials. Of particular interest would be the conventional application (ground, aerial or irrigation) of agricultural fertilizer materials, pesticides, fungicides, insecticides, herbicides and the like, where controlled concentrations of pesticide or fertilizer are desired in aqueous streams being applied to crops or other target organisms. For example, in the application of a herbicide, the delivery of propanil would be of interest for the control of barnyard grass in rice crops.

The aforementioned list of organic materials is meant to be representative of the types of solute-source materials of potential use in the present invention and is not meant to limit in any way the scope or use of the present invention except as limited herein by the claims.

The permeator device may be equipped with a means for ensuring a constant temperature of the liquid stream containing the solute. Maintaining a constant temperature will result in greater control of the permeation rate and of the concentration of solute in the liquid stream. When operating at room temperature, where temperature fluctuations are minimal, solute concentrations are readily maintained without the need for constant temperature control means, but not to the degree of precision attainable if a constant temperature bath is used. If elevated temperatures are required, other means in addition to the circulating constant temperature bath may be used, e.g., injected steam or other preheater means in the constant temperature system or electrical heating tapes wrapped around the housing or jacket.

Although the direction of liquid flow in the inflowing liquid stream is generally depicted as being in a downflow direction through the housing, the permeator device and process of the present invention may also be operated so that the inflowing liquid stream is directed in an upflow direction through the housing with the resultant outflowing liquid stream (containing the VOC) exiting via the top of the housing rather than at the bottom. Alternatively, the housing may be positioned in a horizontal manner or at any other angle between horizontal and vertical, in which case the inflowing liquid stream may be directed to either end of the housing depending upon the particular application in use.

The permeator device may be used to determine the adsorption capacities of a variety of materials for a particular solute in a facile, quantitative manner. The permeator device is capable of providing a continuous liquid stream containing a constant concentration of a solute while maintaining the constant concentration for long periods of time with little or no variation, i.e., low relative standard deviation. This capability is especially useful when detecting small differences in adsorption capacities of similar adsorbent materials. Previous methods of providing known concentration solutions of VOCs were dependent upon static methods, i.e., preparation and storage of large quantities of batch solutions of known concentrations of VOC, which were subject to change in VOC concentration as the solutions were used (introduction of vapour headspace).

When determining the adsorption capacity of a material, the liquid stream containing a known concentration of solute is passed through a column containing an adsorbent material. Based on the amount of adsorbent in the column and the concentrations of solute found in the influent and effluent liquid streams, the adsorption capacity of the adsorbent material may be readily determined. Analytical sampling ports provide access to the liquid streams for analysis. Most solutes, particularly VOCs, are readily analyzed by gas chromatographic techhiques, but any analytical method which is particularly suited for a given solute may be used, e.g., HPLC (high performance liquid chromatography). Alternatively, the analytical sample ports may be replaced with direct monitoring devices, such as ultraviolet, infrared, TOC or refractive index detectors.

Among the various types of materials which may be evaluated for adsorption characteristics are activated carbons, silicas, zeolites, porous unfunctionalized or functionalized copolymers and the like, which have an affinity for the particular solutes being studied. Of particular interest are porous polymers represented by the group consisting of carbonaceous adsorbents, macroporous crosslinked vinylaromatic polymers, and functionalized macroporous crosslinked vinylaromatic polymers. As used herein, macroporous vinylaromatic polymers include macroporous or macroreticular copolymers prepared by known methods in the presence of a precipitant, such as those disclosed in Meitzner *et al*., US-A-4,256,840, which is hereby incorporated into the present specification by reference. Neely, US-A-4,040,990 and Maroldo *et al*., US-A-4,839,331, which are hereby incorporated into the present specification by reference, disclose carbonaceous adsorbents prepared by the controlled partial pyrolysis of macroporous mono- and poly-sulfonated, or otherwise fixated, polystyrene to produce charred beads maintaining the macroporous structure of the precursor polymer. The term carbonaceous adsorbent as used herein includes particles prepared by the processes of Neely or Maroldo *et al.* from sulfonated or polysulfonated macroporous vinylaromatic polymer resins.

A wide variety of operational parameters are available to the practitioner for producing and controlling permeation rate and the desired solute concentration in the liquid stream based on the selection of the type of polymeric tubing used, tubing dimensions, number of permeators, liquid stream flowrate and the type of solute-source material. Use of the permeator device of the present invention is based on the dynamic continuous production of known constant concentration solute-containing liquid streams. In addition, the invention allows for the rapid change in concentration of the solute, in particular VOCs, in the liquid stream by controlling the number of permeators used or by adjusting the flow rate of the liquid stream coming into contact with the permeators. Liquid stream flowrates may vary widely depending upon the size of the system used and the desired concentration of VOC. With systems similar to those described in the Examples *(infra),* typical liquid stream flowrates range from about 10 to about 200 millilitres per minute (ml/min), preferably in the range of 20 to about 40 ml/min.

Other methods may be used to adjust the desired concentration of VOC in the liquid stream, e.g., adjust the temperature of the liquid stream or change the surface area of the permeators by varying the lengths of tubing material; however, changing the number of permeators or adjusting the liquid stream flowrate is preferred because of the ease of operation and short time periods required between changeover from one concentration to another. VOC concentration is directly proportional to the number of permeators used and inversely proportional to the liquid stream flowrate, assuming the permeators are prepared from the same polymeric material with the same dimensions, i.e., wall thickness and effective length. For example, if two permeators provide 5 ppm of VOC in a liquid stream when the flow rate is 10 ml/min, then three permeators should provide about 7.5 ppm VOC at the same flowrate or about 15 ppm VOC at 5 ml/min. A significant advantage of using the permeator device of the present invention compared to prior methods is that many different VOC concentration liquid streams may be produced in relatively short periods of time without storing large volumes of known-concentration solutions. This is possible because the invention uses a continuous or dynamic process rather than the static processes of prior methods.

In addition to the aforementioned variables which may be manipulated to produce a particular solute concentration in a liquid stream, it will be appreciated by those skilled in the field that more than one solute-source material may be introduced into the liquid stream at one time by using more than one permeator, each containing a different solute-source material. For example, two permeators, one capable of generating 1.0 ppm of solute A and another capable of generating 2.0 ppm of solute B at a given set of flowrate and temperature conditions, may be used to generate a liquid stream containing 1.0 ppm solute A and 2.0 ppm solute B. The different permeators may be placed in the same column (housing) or they may be placed in individual columns arranged in series. This approach is particulary useful in determining the adsorption characteristics of a given adsorbent material for more than one type of solute in a single experiment or for delivering more than one solute to a specific target environment.

When one or more permeators are initially prepared and inserted into the housing and a flow rate of water has been selected there is an initial induction period of from about 1 to about 3 days before the solute-source material establishes a uniform permeation rate through the walls of the permeator. If the flow of liquid is stopped or changed for any reason the induction period for reestablishing a new constant permeation rate is only about 2 to about 4 hours. If permeators are refilled before complete depletion of the originally charged liquid solute-source material, the induction period for resuming a constant permeation rate is again on the order of several hours. If, on the other hand, additional new permeators are added to the permeator device in order to generate a significant increase in concentration of solutes in the liquid stream, the induction period for reestablishing a new constant permeation rate is about 1 to 3 days. In contrast to gas phase permeator systems, where induction periods of 1 to 3 weeks are common before a uniform permeation rate is established upon startup (*Permeation and Diffusion Devices,* p 6, Thermedics Inc. (Woburn, Massachusetts), we have found that induction periods using the liquid phase permeator device and process of the present invention are significantly reduced.

Once prepared, permeators containing a given solute-source material have a useful lifetime from about 1 to about 6 months or more, depending upon the amount of solute-source material used and the material of construction and wall thickness of the permeator; the permeator should maintain its constant delivery rate as long as any liquid remains inside the permeator.

The present invention will now be further described with reference to the accompanying drawings, in which:-
Figure **1** is a schematic representation of one embodiment of the permeator device;
Figure **2** is a schematic representation of one embodiment of a permeator;
Figure **3** is a schematic representation of one embodiment of the permeator device involving means for temperature control of the liquid stream containing solutes; and
Figure **4** is a schematic representation of the use of the permeator device to determine the adsorption capacity of an adsorbent material.

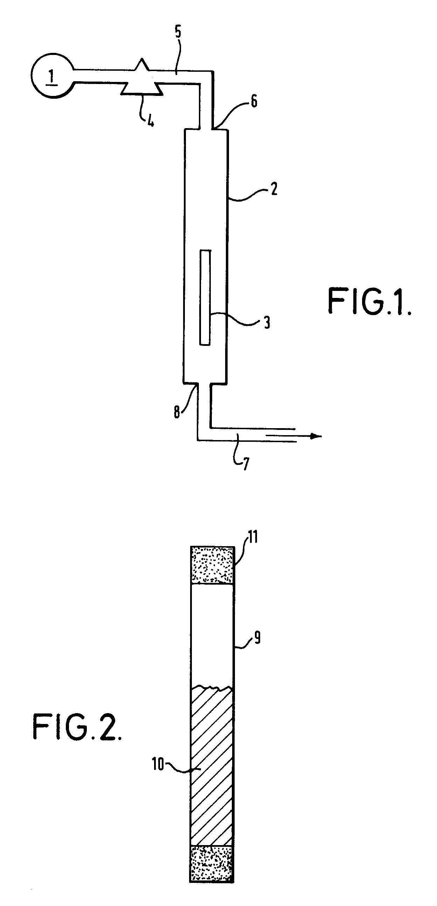

Referring to the drawings, Figure **1** illustrates the basic elements (housing **2** and permeator **3**) of the permeator device together with several additional features. A supply source of liquid **1** is connected by a first liquid conduit to housing **2** containing one or more permeators **3**. A suitable liquid moving means **4** moves the liquid stream **5** through housing **2** via housing inlet opening **6** so that permeator **3** containing solute-source material **10** (Figure **2**) is in contact with moving liquid stream **5**. Liquid stream **7** containing the solute exits housing **2** via housing outlet opening **8**.

Figure **2** illustrates one form of construction for the permeator **3**, in this case a sealed tube. An appropriate amount of solute-source material **10** is placed in tubing **9**, which is made of a suitable polymeric material; tubing **9** is closed at both ends by a suitable sealing means **11**.

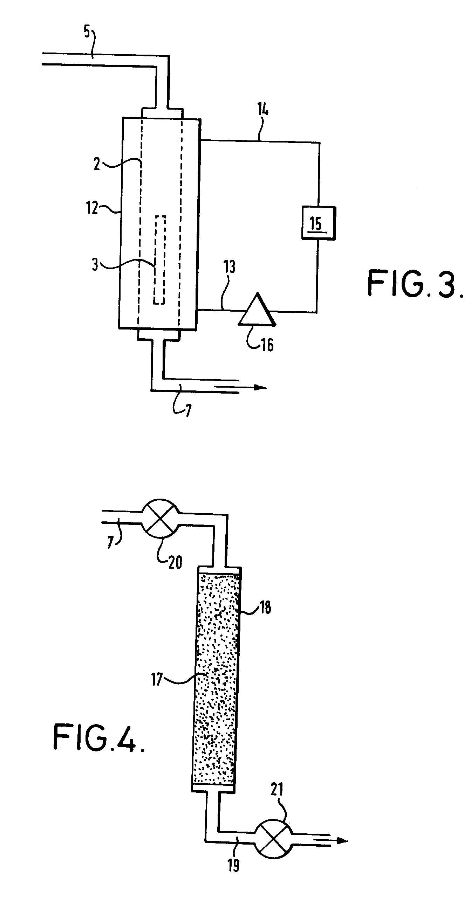

Figure **3** illustrates a variation of the embodiment of the permeator device in which housing **2** is fitted with jacket **12** for controlling the temperature of the contents of housing **2**. Jacket **12** is fitted with inlet **13** and outlet **14** lines for circulation of heat transfer fluid at a predetermined temperature from constant temperature bath **15**. A suitable pumping means **16** is placed in inlet line **13** to provide circulation of the heating or cooling fluid from constant temperature bath **15**.

Figure **4** illustrates one use of the permeator device, in this case for the determination of adsorption capacity of an adsorbent material **17**. Liquid stream **7** containing solute is directed via a second liquid conduit from housing **2** outlet opening **8** (Figure **1**) to column **18** containing the adsorbent material **17** to be evaluated. Liquid stream **19** represents the liquid stream after passing through adsorbent material **17**. Sample ports **20** and **21** are located in the liquid conduits containing liquid streams **7** and **19**, respectively, for removing samples for analysis of solute in the liquid streams.

The specific embodiments depicted in Figure **1** through Figure **4** are representative of the invention and not meant to limit in any way the scope or use of the present invention except as limited herein by the claims.

The following Examples are presented to illustrate certain embodiments of the present invention and not to limit it, except as it is limited in the claims. All ratios and percentages are by weight, unless otherwise indicated, and all reagents are of good commercial quality unless otherwise indicated. Examples 1 through 4 represent use of the invention to provide a source of dilute constant concentration streams of volatile organic chemicals in water. Examples 5 and 6 represent use of the invention to determine the adsorption capacities of two different adsorbent materials.

### EXAMPLE 1

Using a permeator system according to the illustration in Figure **1** and including the temperature control option of Figure **3**, the following conditions were used to provide a continuous aqueous stream of approximately 1 ppm trichloroethylene (TCE). Permeators were constructed of poly(tetrafluorethylene) tubing ("spaghetti" type TFE) with an effective length of 55 or 110 millimetres (mm), an internal diameter of 8.26 mm (0.325 inches), and a wall thickness of 0.3 mm (0.012 inches). The permeators were sealed at each end with 9 mm X 28 mm fire-polished glass rod pieces after placing approximately 3 grams of TCE in each permeator.

A housing was provided in the form of jacketed column approximately 3.81 cm (approximately 1.5 inches) in diameter and approximately 45.72 cm (approximately 18 inches) in length. Initially the system was maintained at 36°C by use of a constant temperature water bath and the liquid stream (deionized water) was maintained at 40 ml/min. Seven permeators prepared as above were inserted in the jacketed column: five 110-mm and two 55-mm permeators. Alter 3 days of operation, this system generated a liquid stream of 1.2 ppm TCE with a relative standard deviation about 8%. At this point, the liquid stream effluent from the permeator device was connected to a guard column of carbonaceous adsorbent [30.48 cm X 2.54 cm (12 inches X 1 inch)] by a liquid conduit as illustrated in Figure 4 and the liquid stream flow rate was adjusted to 28 ml/minute; this resulted in a back-pressure on the system of approximately 199.96 kPa (approximately 29 pounds per square inch). The guard column was routinely used to prevent contamination of the water system upon disposal of the liquid streams.

Table 1 presents data on the concentration (ppm) of TCE found in the liquid stream as a function of running time (days) from the adjustment of flowrate. Liquid stream samples were analyzed for TCE by well-known gas chromatographic methods using an electron capture detector (ECD).

**TABLE 1**

| Day | Ppm TCE Found |
|---|---|
| 1 | 1.54 |
| 2 | 2.31 |
| 3 | 2.20 |
| 4 | 2.28 |
| 5 | 2.12 |
| 6 | 2.29 |
| 7 | 2.44 |
| 8 | 2.33 |
| 9 | 2.36 |
| 10 | NA |
| 11 | 2.33 |
| 12 | 2.44 |

Starting with day 2 and continuing through day 12 (NA means not analyzed), the average TCE concentration in the liquid stream was 2.31 ppm with a relative standard deviation of 4%. This run demonstrates the very stable concentration of TCE that could be maintained for an extended period of time.

### EXAMPLE 2

In a manner similar to that described in Example 1, except that no constant temperature bath was used, an aqueous stream of chloroform (trichloromethane) was generated using 5 permeators (110-mm length), each containing approximately 6 grams of chloroform, and using a liquid stream flowrate of 28 ml/min at approximately 25°C. These conditions generated an aqueous stream containing about 14.5 ppm chloroform. The liquid stream flowrate was then adjusted to 40 ml/min at a temperature of 26-27°C, resulting in a concentration of 8.4 ppm chloroform (relative standard deviation of 4%) after 2 days of operation.

### EXAMPLE 3

In a manner similar to Example 2, two permeators [53.34 cm (21 inches) effective length, each containing approximately 3 grams of chloroform] were subjected to an aqueous stream flowrate of 36 ml/min at about 25°C. After 3 days the chloroform concentration was stable at 1.0 ppm in the aqueous stream.

### EXAMPLE 4

In a manner similar to Example 1, six permeators (110-mm effective length, each containing approximately 3 grams of TCE) were subjected to an aqueous stream flowrate of 40 ml/min and maintained at 36°C. After 3-4 days equilibration, the TCE concentration was stable at 1.0 ppm in the aqueous stream.

### EXAMPLE 5

In a manner similar to that described in Example 1, except that no constant temperature bath was used, a permeator device was constructed as follows: 4 groups of permeators were placed in 4 glass columns [2.54 cm X 60.96 cm (1 inch X 24 inches)] connected in a series arrangement; each group of permeators consisted of a set of 5 individual permeators, each permeator made from tubing approximately 45.72 cm (approximately 18 inches) in length with an internal diameter of 8.26 mm (0.325 inches) and a wall thickness of 0.3 mm (0.012 inches); each permeator contained approximately 12 ml of TCE. A liquid stream of deionized water (25-27°C) at a flowrate of 82 ml/min was used to produce a liquid stream containing 8.8 ppm TCE (relative standard deviation of 9%) for a 3 week period.

The liquid stream containing 8.8 ppm TCE was then directed to a set of 3 adsorbent columns [2.54 cm X 30.48 cm (1 inch X 12 inches)] arranged in series. Each adsorbent column contained 33.6 grams (80.8 ml) of Filtrasorb 400 granular activated carbon (GAC), available from Calgon Corporation ("Filtrasorb" is a trademark). Analytical sample ports were placed in the influent liquid streams to each of the three adsorbent columns and in the effluent liquid stream of the final (third) column. Each column of adsorbent was evaluated for its breakthrough capacity for TCE by monitoring the concentration of TCE in the respective influent/effluent streams. By breakthrough we mean the point at which the adsorbent material begins to lose its capability for removing all of the solute in the liquid stream passing through the adsorbent; this may be due to kinetic factors such as flow rate, contact time and the like, even though the adsorbent's equilibrium saturation capacity (non-flowing conditions) for the solute may not have been exceeded. In the determination of breakthrough capacities, an endpoint of 5 micrograms (µg)TCE/litre (derived from drinking water standards for TCE) was used, i.e., when the effluent exceeded 5 µg TCE/litre, breakthrough was considered to have occurred.

Breakthrough for column 1 occurred immediately (less than 5 minutes), breakthrough for column 2 occurred at approximately 42 hours (207 litres liquid stream treated) and breakthrough for column 3 occurred after about 123 hours (605 litres treated). The bed-depth/ service-time (BDST) technique was used to analyze the data (R.A. Hutchins, Chemical Engineering, **80**, pp 133-138, 1973). The dynamic adsorption capacity or kinetic saturation capacity (KSC) of the adsorbent material was determined by plotting breakthrough time versus bed weight. KSC was found to be 105 milligrams (mg) TCE/gram Filtrasorb 400 GAC (44 mg TCE/ml Filtrasorb 400 GAC) and critical bed depth, the minimum bed depth needed to satisfy the effluent criterion of less than 5 µg TCE/litre, was 23.7 centimetres (cm) of Filtrasorb 400 GAC under the flow conditions studied.

### EXAMPLE 6

In a manner identical to Example 5, except that the granular activated carbon was replaced with carbonaceous adsorbent, the breakthrough capacity for Ambersorb 563 carbonaceous adsorbent (available from Rohm and Haas Company) for TCE was determined ("Ambersorb" is a trademark of Rohm and Haas Company). Deionized water (24-27°C) at a flowrate of 82 ml/min was used to produce a liquid stream containing 8.8 ppm TCE (relative standard deviation of 7%) for a 5 week period. Each adsorbent column contained 42.5 grams (78.7 ml) of Ambersorb 563 adsorbent.

Breakthrough for column 1 occurred at approximately 88 hours (430 litres liquid stream treated), breakthrough for column 2 occurred at approximately 308 hours (1510 litres treated) and breakthrough for column 3 occurred at about 531 hours (2623 litres treated). KSC was found to be 227 mg TCE/gram Ambersorb 563 adsorbent (122 mg TCE/ml Arnbersorb 563 adsorbent) and critical bed depth was 9.5 cm of Ambersorb 563 adsorbent under the flow conditions studied.

The same TCE-containing liquid stream was used in Examples 5 and 6 over 8 consecutive weeks to provide influent for the adsorption capacity determinations, thus demonstrating the reproducibility and easy control of low concentration VOC-containing aqueous streams achievable when using the device and process of the invention. In addition, the significantly greater adsorption capacity for TCE of Ambersorb 563 carbonaceous adsorbent relative to Filtrasorb 400 granular activated carbon was readily determined by using the constant concentration TCE-containing liquid stream provided by the permeator device and process of the invention.

## Claims

1. A process for providing a constant concentration of a solute in a moving liquid stream, which comprises contacting the moving liquid stream with one or more permeators having walls permeable to a solute-source material and containing the solute-source material.

2. A process for determining the adsorption capacity of an adsorbent material for solutes, which comprises:
(a) contacting a moving liquid stream with one or more permeators which contain a solute-source material, to provide a constant concentration of solute in the moving liquid stream;
(b) determining the concentration of the solute in the moving liquid stream which has been in contact with the permeator(s);
(c) passing the moving liquid stream which has been in contact with the permeator(s) through a known amount of adsorbent material; and
(d) determining the concentration of the solute in the moving liquid stream after the liquid stream has passed through the adsorbent material.

3. A process as claimed in claim 2, wherein the adsorbent material is selected from activated carbons, silicas, zeolites, carbonaceous adsorbents, macroporous crosslinked vinylaromatic polymers, and functionalized macroporous crosslinked vinylaromatic polymers.

4. A process as claimed in any of claims 1 to 3, wherein the moving liquid stream is substantially water, and the solute is a volatile organic chemical.

5. A permeator device suitable for use in carrying out the process of any of claims 1 to 4, which comprises:
(a) a housing having an inlet opening and an outlet opening for allowing the movement of a liquid through the housing, and
(b) one or more permeators positioned within the housing, each permeator having walls permeable to a solute-source material.

6. A device as claimed in claim 5, which further comprises the solute-source material disposed within the permeator(s), the solute-source material being present in an amount sufficient for the solute-source material to permeate at a constant rate through the walls of the permeator(s) thereby providing a concentration of a solute in the liquid.

7. A device as claimed in claim 6, wherein the solute-source material is a volatile organic chemical.

8. A device as claimed in any of claims 5 to 7, which further comprises a supply source of liquid, a first liquid conduit connecting the supply source and the inlet opening of the housing and means for moving the liquid from the supply source through the conduit and housing.

9. A device as claimed in claim 8, wherein the means for moving the liquid is a mechanical pump.

10. A device as claimed in any of claims 5 to 9, which further comprises a means for determining the concentration of solute in the liquid and a second liquid conduit connecting the housing outlet opening to the means for determining solute concentration.

11. A device as claimed in claim 10, wherein the means for determining solute concentration comprises a monitoring device or monitoring sample port.

12. A device as claimed in claim 11, wherein the monitoring device is a total organic carbon detector.

13. A device as claimed in any of claims 5 to 12, wherein the housing is a column, tube or pipe constructed of a material selected from glass, plastic and metal, the material being substantially unaffected by the liquid.

14. A device as claimed in any of claims 5 to 13, which further comprises means for controlling the temperature of the liquid within the housing to a predetermined temperature.

15. A device as claimed in claim 14, wherein the means for controlling the temperature is a jacket surrounding the housing through which a fluid circulates at a predetermined temperature.

16. A device as claimed in any of claims 5 to 15, wherein the walls of the permeator(s) are poly(tetrafluoroethylene) and have a thickness of from 0.13 to 0.51 mm (0.005 to 0.02 inches).

17. A device as claimed in claim 16, wherein the walls have a thickness of from 0.25 to 0.38 mm (0.010 to 0.015 inches).

18. Use of a permeator device as claimed in any of claims 5 to 18 for metering a solute-source material into a liquid.
